# EUROPEAN PATENT APPLICATION

(11) **EP 2 466 124 A2**
(43) Date of publication of application: **20.06.2012**
(21) Application number: 11193204.2
(22) Date of filing: 13.12.2011
(51) Int. Cl.: F03D 7/02

(54) **Hydraulic yaw drive system for a wind turbine and method of operating the same**

(30) Priority: 20.12.2010 US 973221
(71) Applicant: General Electric Company, Schenectady, New York 12345 (US)
(72) Inventor: Edenfeld, Thomas, 49080 Osnabruck (DE); Siebers, Thomas, 48485 Neuenkirchen (DE)
(74) Representative: Bedford, Grant Richard

(57) **Abstract**

A yaw drive system for a wind energy system includes a hydraulic yaw motor 244 for adjusting the yaw angle of a nacelle of a wind energy system, at least one hydraulic pump 210 adapted for providing a pressurized hydraulic fluid, a hydraulic line system, including at least one line connecting the at least one hydraulic pump 210 and the at least one hydraulic yaw motor 244, and at least one overpressure valve 220. The at least one overpressure valve 220 is connected to a flow path of the hydraulic fluid between the at least one hydraulic pump and the at least one hydraulic motor. Further, a method for changing a yaw angle of a wind turbine nacelle is provided.

## Description

The subject matter described herein relates generally to methods and systems for the yaw adjustment of wind turbines, and more particularly, to methods and systems for the hydraulic yaw adjustment of wind turbines.

At least some known wind turbines include a tower and a nacelle mounted on the tower. A rotor is rotatably mounted to the nacelle and is coupled to a generator by a shaft. A plurality of blades extend from the rotor. The blades are oriented such that wind passing over the blades turns the rotor and rotates the shaft, thereby driving the generator to generate electricity.

If the plane defined by the rotor blades of the wind turbine is not perpendicular to the wind, the turbine may still be operable, but the rotor blades and the nacelle, to which they are coupled via the rotor blade hub and the rotor axis, experience shear forces that lead to a large load on these parts, to wear, and, hence, to an increased need for maintenance. Typically, the nacelle, to which the rotor is connected, is therefore turned to directly face the wind. To this aim, a controller, such as an electronic computer, receives measurement data of wind direction and wind speed and controls a motor to accordingly adjust a yaw angle of the nacelle.

Typically, the at least one motor is an electric motor, which turns the nacelle via a gear with a high transmission ratio. If the wind changes direction, the nacelle is turned accordingly by the yaw drive system, until the plane of the rotor is again perpendicular to the direction of the wind. During this process, as long as the rotor plane is not perpendicular to the wind direction, the wind will exhibit shear forces on the nacelle which may contravene the force of the yaw drive motor. If a gust hits the wind turbine during this process, the yaw drive system, and particularly the yaw motor, has to withstand particularly high forces.

Hence, the maximum exertable torque of the yaw drive motor has to be adapted such that the yaw drive system may exert a torque on the nacelle which is higher than the torque that the rotor exerts on the nacelle during strong gusts or other cases with extreme load. The torque which the yaw motor or motors have to produce to move the nacelle during a gust is considerably higher than the torque that is needed for the adjustment of the yaw angle under normal operating conditions. In extreme cases, the torque exerted on the yaw motor can be four to five times as high as the torque which is needed to adjust the yaw angle under standard operating conditions.

Further, the gear components of the yaw drive system also have to be designed to withstand these high gust forces. Together, these factors require a considerable oversizing of the motor and gear of conventional yaw drive systems, which is an undesired cost factor.

Accordingly, it is desirable to have a yaw drive system which is designed to exhibit a maximum torque which is sufficient for the adjustment of the yaw angle under normal operating conditions, but has a lower maximum torque than conventional yaw systems and is suitable to react on high torque caused by gusts without suffering damage or without further unwanted side effects.

In one aspect according to the present invention, a yaw drive system for a wind energy system is provided. The system includes a hydraulic yaw motor for adjusting the yaw angle of a nacelle of a wind energy system, at least one hydraulic pump adapted for providing a pressurized hydraulic fluid, a hydraulic line system, including at least one line connecting the at least one hydraulic pump and the at least one hydraulic yaw motor, and at least one overpressure valve. The at least one overpressure valve is connected to a flow path of the hydraulic fluid between the at least one hydraulic pump and the at least one hydraulic motor.

In another aspect, a method of changing a yaw angle of a wind turbine nacelle is provided. The method includes providing a yaw drive system, which includes a hydraulic yaw motor for adjusting the yaw angle of a nacelle of a wind energy system, at least one hydraulic pump adapted for providing a pressurized hydraulic fluid, a hydraulic line system, including at least one line connecting the at least one hydraulic pump and the at least one hydraulic yaw motor, and at least one overpressure valve, wherein the at least one overpressure valve is connected to a flow path of the hydraulic fluid between the at least one hydraulic pump and the at least one hydraulic motor, and; actuating the at least one hydraulic yaw motor in order to change the yaw angle of the nacelle.

Various aspects, advantages and features of the present invention are apparent from the dependent claims, the description and the accompanying drawings, in which:
Fig. 1 is a perspective view of an exemplary wind turbine.
Fig. 2 is an enlarged sectional view of a portion of the wind turbine shown in Figure 1.
Fig. 3 is a perspective view of a yaw drive system according to embodiments.
Fig. 4 is a perspective view of a yaw drive system according to further embodiments.
Fig. 5 is a perspective view of a yaw drive system according to yet further embodiments.
Fig. 6 is a perspective view of a yaw drive system according to other embodiments.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

The embodiments described herein include a wind turbine system that has a hydraulic yaw drive system with improved characteristics when subjected to high wind forces. More specifically, the yaw drive system is designed such that a valve in the hydraulic system may open during high loads caused by gusts, such that the nacelle may move, in response, or, as a result of the wind force, against the torque exerted by the yaw motor, or, in other words, the nacelle may "slip" due to the high load and thus passively react to the wind force.

As used herein, the term "blade" is intended to be representative of any device that provides a reactive force when in motion relative to a surrounding fluid. As used herein, the term "wind turbine" is intended to be representative of any device that generates rotational energy from wind energy and, more specifically, converts kinetic energy of wind into mechanical energy. As used herein, the term "wind generator" is intended to be representative of any wind turbine that generates electrical power from rotational energy generated from wind energy and, more specifically, converts mechanical energy converted from kinetic energy of wind to electrical power. As used herein, the term "yaw drive system" is intended to be representative of a system for the adjustment, respectively the manipulation of the yaw angle, of a nacelle of a wind turbine. As used herein, the term "overpressure valve" is intended to be representative of any device or system which is suitable to release pressure from a hydraulic system, if the pressure exceeds a predefined threshold. That is, an overpressure valve may be a mechanical overpressure valve, but may, for instance, also be a system able to sense a pressure with a sensor, and to control a release valve based on the information from the sensor signal.

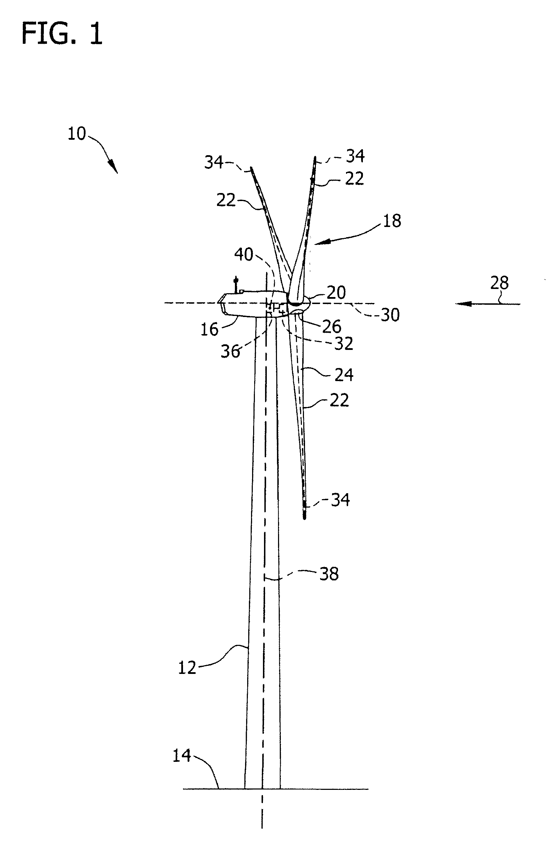

Figure 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support system 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Figure 1) between support system 14 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. Rotor blades 22 are mated to hub 20 by coupling a blade root portion 24 to hub 20 at a plurality of load transfer regions 26. Load transfer regions 26 have a hub load transfer region and a blade load transfer region (both not shown in Figure 1). Loads induced to rotor blades 22 are transferred to hub 20 via load transfer regions 26.

In one embodiment, rotor blades 22 have a length ranging from about 15 meters (m) to about 91 m. Alternatively, rotor blades 22 may have any suitable length that enables wind turbine 10 to function as described herein. For example, other non-limiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18. In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

In the exemplary embodiment, control system 36 is shown as being centralized within nacelle 16, however, control system 36 may be a distributed system throughout wind turbine 10, on support system 14, within a wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels.

In the embodiments described herein, memory may include, without limitation, a computer-readable medium, such as a random access memory (RAM), and a computer-readable non-volatile medium, such as flash memory. Alternatively, a floppy disk, a compact disc read-only memory (CD-ROM), a magneto-optical disk (MOD), and/or a digital versatile disc (DVD) may also be used. Also, in the embodiments described herein, input channels include, without limitation, sensors and/or computer peripherals associated with an operator interface, such as a mouse and a keyboard. Further, in the exemplary embodiment, output channels may include, without limitation, a control device, an operator interface monitor and/or a display.

Processors described herein process information transmitted from a plurality of electrical and electronic devices that may include, without limitation, sensors, actuators, compressors, control systems, and/or monitoring devices. Such processors may be physically located in, for example, a control system, a sensor, a monitoring device, a desktop computer, a laptop computer, a programmable logic controller (PLC) cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). Instructions that are executed may include, without limitation, wind turbine control system control commands. The execution of sequences of instructions is not limited to any specific combination of hardware circuitry and software instructions.

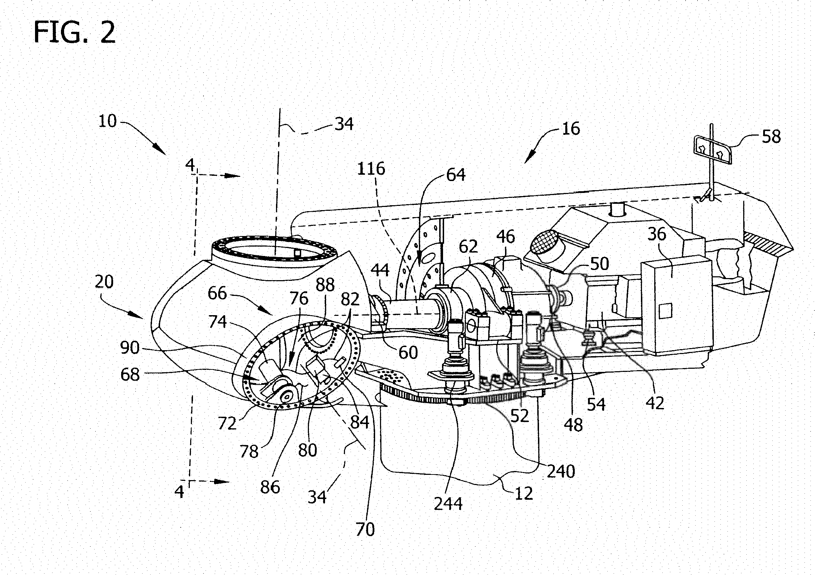

Figure 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle 16 by rotor shaft 44 (sometimes referred to as either a main shaft or a low speed shaft), a gearbox 46, a high speed shaft 48, and a coupling 50. In the exemplary embodiment, rotor shaft 44 is disposed coaxial to longitudinal axis 116. Rotation of rotor shaft 44 rotatably drives gearbox 46 that subsequently drives high speed shaft 48. High speed shaft 48 rotatably drives generator 42 with coupling 50 and the rotation of high speed shaft 48 facilitates production of electrical power by generator 42. Gearbox 46 and generator 42 are supported by a support 52 and a support 54. In the exemplary embodiment, gearbox 46 utilizes a dual path geometry to drive high speed shaft 48. Alternatively, rotor shaft 44 is coupled directly to generator 42 with coupling 50.

Nacelle 16 also includes a yaw drive mechanism or yaw motor 244 that may be used to rotate nacelle 16 and hub 20 on yaw axis 38 (shown in Figure 1) to control the perspective of rotor blades 22 with respect to direction 28 of the wind. Nacelle 16 also includes at least one meteorological mast 58 that includes a wind vane and anemometer (neither shown in Figure 2). Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, support 52 and/or support 54, and forward support bearing 60 and aft support bearing 62, are sometimes referred to as a drive train 64.

In the exemplary embodiment, hub 20 includes a pitch assembly 66. Pitch assembly 66 includes one or more pitch drive systems 68 and at least one sensor 70. Each pitch drive system 68 is coupled to a respective rotor blade 22 (shown in Figure 1) for modulating the blade pitch of associated rotor blade 22 along pitch axis 34. Only one of three pitch drive systems 68 is shown in Figure 2.

In the exemplary embodiment, pitch assembly 66 includes at least one pitch bearing 72 coupled to hub 20 and to respective rotor blade 22 (shown in Figure 1) for rotating respective rotor blade 22 about pitch axis 34. Pitch drive system 68 includes a pitch drive motor 74, pitch drive gearbox 76, and pitch drive pinion 78. Pitch drive motor 74 is coupled to pitch drive gearbox 76 such that pitch drive motor 74 imparts mechanical force to pitch drive gearbox 76. Pitch drive gearbox 76 is coupled to pitch drive pinion 78 such that pitch drive pinion 78 is rotated by pitch drive gearbox 76. Pitch bearing 72 is coupled to pitch drive pinion 78 such that the rotation of pitch drive pinion 78 causes rotation of pitch bearing 72. More specifically, in the exemplary embodiment, pitch drive pinion 78 is coupled to pitch bearing 72 such that rotation of pitch drive gearbox 76 rotates pitch bearing 72 and rotor blade 22 about pitch axis 34 to change the blade pitch of blade 22.

Pitch drive system 68 is coupled to control system 36 for adjusting the blade pitch of rotor blade 22 upon receipt of one or more signals from control system 36. In the exemplary embodiment, pitch drive motor 74 is any suitable motor driven by electrical power and/or a hydraulic system that enables pitch assembly 66 to function as described herein. Alternatively, pitch assembly 66 may include any suitable structure, configuration, arrangement, and/or components such as, but not limited to, hydraulic cylinders, springs, and/or servo-mechanisms. Moreover, pitch assembly 66 may be driven by any suitable means such as, but not limited to, hydraulic fluid, and/or mechanical power, such as, but not limited to, induced spring forces and/or electromagnetic forces. In certain embodiments, pitch drive motor 74 is driven by energy extracted from a rotational inertia of hub 20 and/or a stored energy source (not shown) that supplies energy to components of wind turbine 10.

Pitch assembly 66 also includes one or more overspeed control systems 80 for controlling pitch drive system 68 during rotor overspeed. In the exemplary embodiment, pitch assembly 66 includes at least one overspeed control system 80 communicatively coupled to respective pitch drive system 68 for controlling pitch drive system 68 independently of control system 36. In one embodiment, pitch assembly 66 includes a plurality of overspeed control systems 80 that are each communicatively coupled to respective pitch drive system 68 to operate respective pitch drive system 68 independently of control system 36. Overspeed control system 80 is also communicatively coupled to sensor 70. In the exemplary embodiment, overspeed control system 80 is coupled to pitch drive system 68 and to sensor 70 with a plurality of cables 82. Alternatively, overspeed control system 80 is communicatively coupled to pitch drive system 68 and to sensor 70 using any suitable wired and/or wireless communications device. During normal operation of wind turbine 10, control system 36 controls pitch drive system 68 to adjust a pitch of rotor blade 22. In one embodiment, when rotor 18 operates at rotor overspeed, overspeed control system 80 overrides control system 36, such that control system 36 no longer controls pitch drive system 68 and overspeed control system 80 controls pitch drive system 68 to move rotor blade 22 to a feathered position to slow a rotation of rotor 18. A power generator 84 is coupled to sensor 70, overspeed control system 80, and pitch drive system 68 to provide a source of power to pitch assembly 66. In the exemplary embodiment, power generator 84 provides a continuous source of power to pitch assembly 66 during operation of wind turbine 10. In an alternative embodiment, power generator 84 provides power to pitch assembly 66 during an electrical power loss event of wind turbine 10. The electrical power loss event may include power grid loss, malfunctioning of the turbine electrical system, and/or failure of the wind turbine control system 36. During the electrical power loss event, power generator 84 operates to provide electrical power to pitch assembly 66 such that pitch assembly 66 can operate during the electrical power loss event.

In the exemplary embodiment, pitch drive system 68, sensor 70, overspeed control system 80, cables 82, and power generator 84 are each positioned in a cavity 86 defined by an inner surface 88 of hub 20. In a particular embodiment, pitch drive system 68, sensor 70, overspeed control system 80, cables 82, and/or power generator 84 are coupled, directly or indirectly, to inner surface 88. In an alternative embodiment, pitch drive system 68, sensor 70, overspeed control system 80, cables 82, and power generator 84 are positioned with respect to an outer surface 90 of hub 20 and may be coupled, directly or indirectly, to outer surface 90.

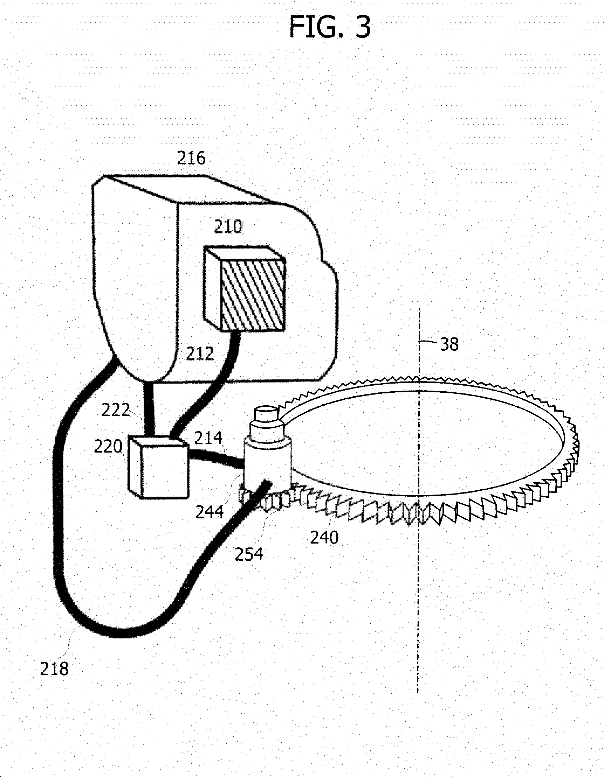

Fig. 3 shows an exemplary embodiment of a yaw drive system for a wind turbine. The system includes a hydraulic yaw motor 244 for adjusting the yaw angle of a nacelle 16 (shown in Fig. 1 and Fig. 2) of a wind energy system about a yaw axis 38. To this end, the motor 244 is driving a cog wheel 254, which engages a larger cog wheel 240 (shown in Fig. 2) rigidly connected to the wind turbine tower 12 (shown in Fig. 2). A hydraulic pump 210 provides the motor 244 with a pressurized hydraulic fluid (not shown) via lines 212, 214. If the pump is engaged, the pressurized fluid in lines 212, 214 will turn the motor 244, and the motor will, through cog wheel 254, move the nacelle against cog wheel 240, which is rigidly fixed to the wind turbine tower 12. Hence, the yaw angle of the wind turbine nacelle with respect to the wind turbine tower may be changed, and the nacelle with the mounted rotor may be adjusted to face the direction of the wind. The pump 210 is typically fed from a tank 216 bearing a reservoir of hydraulic fluid. From motor 244, hydraulic line 218 leads the hydraulic fluid back into the tank 216 after it has flown through the motor.

Between lines 212, 214 connecting the pump 210 and the motor 244, an overpressure valve 220 is located. The valve is typically adapted such that it does not affect, or only insignificantly affects, the flow of hydraulic fluid through lines 212, 214 from the pump to the motor. The valve is further adapted such that, if the pressure of the fluid in lines 212, 214 exceeds a certain predefined value, henceforth also called a threshold value, the valve opens and relieves the overpressure via line 222. The overpressure valve 220 is located in the flow path of the hydraulic fluid between the hydraulic pump and the hydraulic motor.

If, while hydraulic motor 244 is turning the nacelle 16, a strong gust of wind occurs which does not affect the rotor perpendicularly and symmetrically, the rotor 18 will exert a high torque on the nacelle 16 and will attempt to turn it. There are some load cases which produce particularly high torques in the yaw system. Firstly, a high load may be a reaction to an emergency stop of the wind turbine, particularly if the pitch angles of all blades are not reduced simultaneously. If the pitch angle of at least one of the rotor blades remains significantly larger than those of the other blades during the stopping procedure, a strong torque on the nacelle, and thus on the yaw drive system, may arise, which may be as high as five times the yaw drive torque during normal operating conditions. Further, a gust may act on only one side of the rotor, as gusts are a phenomenon typically limited to localized areas. In this case, one side of the rotor is affected by a significantly higher wind force, which also induces high loads in the yaw drive system. Such a torque affecting the nacelle ultimately results in a torque acting on motor 244, as the motor is, during the adjustment process, typically the only device preventing the nacelle 16 from rotating freely about its yaw axis 38. For better understanding, it is noted that all scenarios described to be problematic due to high loads relate to situations where the torque exerted by the wind on the nacelle is directed opposite to the torque exerted by the yaw drive system for turning the nacelle-rotor-system. The opposite case, wherein the wind-induced torque acts in the same direction as the motor torque, is typically non-critical, as the motor is then somewhat assisted by the wind-induced torque.

In the exemplary embodiment, the wind induced torque acts on motor 244 and thus leads to an increase of pressure in the hydraulic system. If the pressure reaches a predefined value, overpressure valve 220 opens and releases the pressure via line 222. As a result, the nacelle may move in a direction opposite to the direction in which it was previously moved by motor 244, hence the nacelle slips against the torque of the yaw motor. The nacelle may even turn, respectively slip, facilitated by the opened overpressure valve, about a considerable angle, e.g. up to 180°, against the torque exerted by the yaw motor. After the gust is over, the pressure in the hydraulic system decreases, and overpressure valve 220 closes. The motor 244 will thus continue to drive nacelle 16 in the original direction. The yaw drive system then, of course, has to firstly turn the nacelle back to the position before the slipping event, and then continues to turn the nacelle to the angular position which was the original objective of the adjustment process.

The wind force, above which the threshold pressure of valve 220 is typically reached, varies strongly between individual wind turbines. As a range of non-limiting examples, the overpressure valve 220 may be adapted to open if a horizontal gust of about 15 m/s to 25 m/s, more typically from 17 m/s to 23 m/s, acts on the wind turbine rotor at an angle of 45 degrees to the rotor's rotational axis during the yaw adjustment process.

There are at least two different cases of operation during gusts, which differ depending on the direction in which the gust exerts torque on the nacelle. The above described scenario applies if the torque exerted by a gust is opposite to the direction in which the motor 244 turns the nacelle. In other words, if the gust hinders the movement of the nacelle caused by the motor. This is the typical case in which the overpressure valve will open, as the motor has to work against the torque induced by the gust, which leads to increased pressure in lines 212, 214. In the other possible case, the gust turns the nacelle in the same direction in which the motor 244 is turning the nacelle. In this case, the reaction of the system depends strongly on the configuration of the hydraulic system and the types of pumps and motors used. In embodiments, an additional brake system is applied, such that the nacelle may be hindered from turning too fast if a gust acts in the same direction as the motor during a yaw adjustment process.

The threshold value or limit value for the pressure at which the overpressure valve opens is strongly dependent on the individual use case, in particular on the size of the wind turbine and on the particular type of hydraulic pump and motor system used. As a non-limiting example, if the hydraulic pump delivers hydraulic fluid at a standard pressure of 300 bar, the threshold value may be set to 330 bar to 500 bar, more typically from 350 bar to 450 bar. In other embodiments, the threshold value may be from 50 bar to 500 bar.

Both the hydraulic pump 210 and the hydraulic motor 244 may either be of a hydrodynamic or of a hydrostatic type. As non-limiting examples, the pump may be a gearpump, a radial piston pump or an axial piston pump, whereas the motor may be a gear and vane motor, an axial plunger motor or a radial piston motor. The advantages of different types of motors and pumps and how they may be combined with each other are well known to the skilled person.

Depending on the type of hydraulic motor chosen, the direction of movement of the motor is changed by an internal mechanism in the motor; in this case, only one pressure line from the pump to the motor is used, which is equipped with overpressure valve 220. Other types of motors require that there is one feed hydraulic feed line for each direction, and the direction of movement is dependent on the line which is used as a feed line. To select the direction of movement, a valve (not shown) is typically used to switch between either of the two lines. The embodiments described herein can be used with either type. For illustrational purposes, only one of the potentially two lines is shown in the figures, and the switching valve is not shown. In applications having two feed lines as described above, each feed line 212, 214 in the figures has to be considered to be representative of a double line, and in this case, each of the double lines has its own overpressure valve 220. Though, for illustrational purposes all embodiments depicted herein are shown with single lines from the hydraulic pump to the hydraulic motors, it shall be emphasized that all embodiments are also representative for embodiments with double feed lines, each of which is used for each direction of movement. Further, it shall be emphasized that in the depicted embodiments, the hydraulic motors include a mechanism for changing the direction of movement, and that these mechanisms are not shown for illustrational purposes. The skilled person will understand which standard measures and details are not shown in the figures for illustrational purposes, and will add them using his standard knowledge.

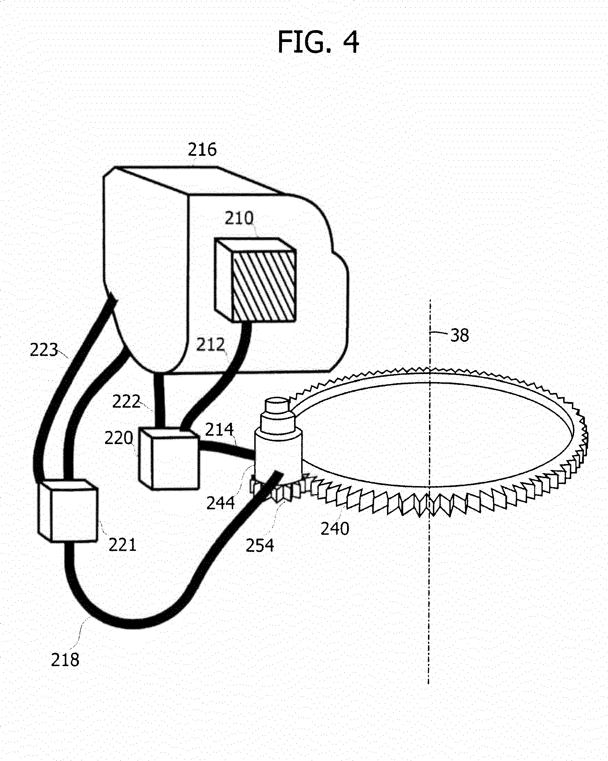

Fig. 4 shows a further embodiment. Therein, a second overpressure valve 221 is provided in line 218 leading from hydraulic motor 244 into tank 216. When the overpressure valve 221 has opened above its threshold pressure, the excess pressure is relieved via line 223 into tank 216. This configuration may be useful in embodiments where tank 216 is pressurized, for instance, to a pressure from 2 bar to 50 bar, more typically, from 5 bar to 30 bar. Accordingly, overpressure valve 221 is typically adjusted to open at a pressure which is equivalent to the pressure in the tank.

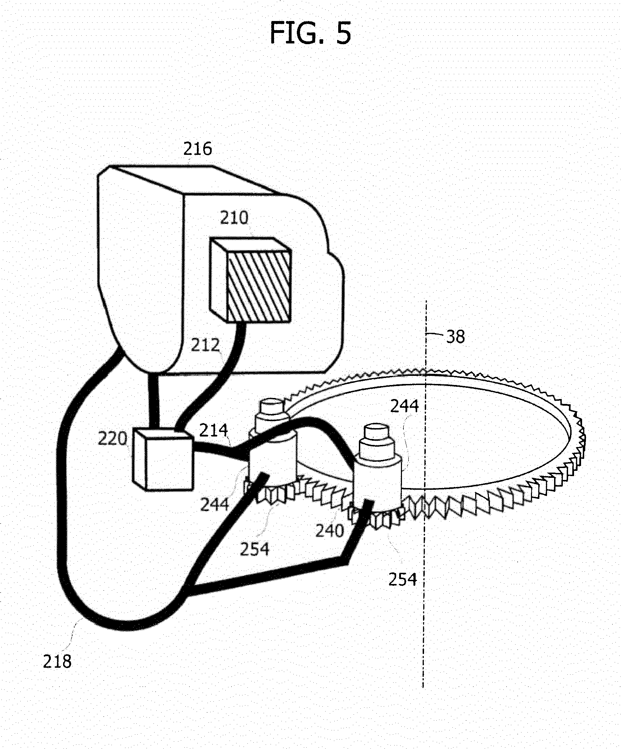

Fig. 5 shows another embodiment, which makes use of a plurality of hydraulic motors 244. In the example, two motors are depicted, but embodiments may include a higher number of motors, such as three, four, or five, or any number which technically makes sense in the specific case. Line 214 is diverted in this case, after leaving pump 210, into a plurality of lines equivalent to the number of motors.

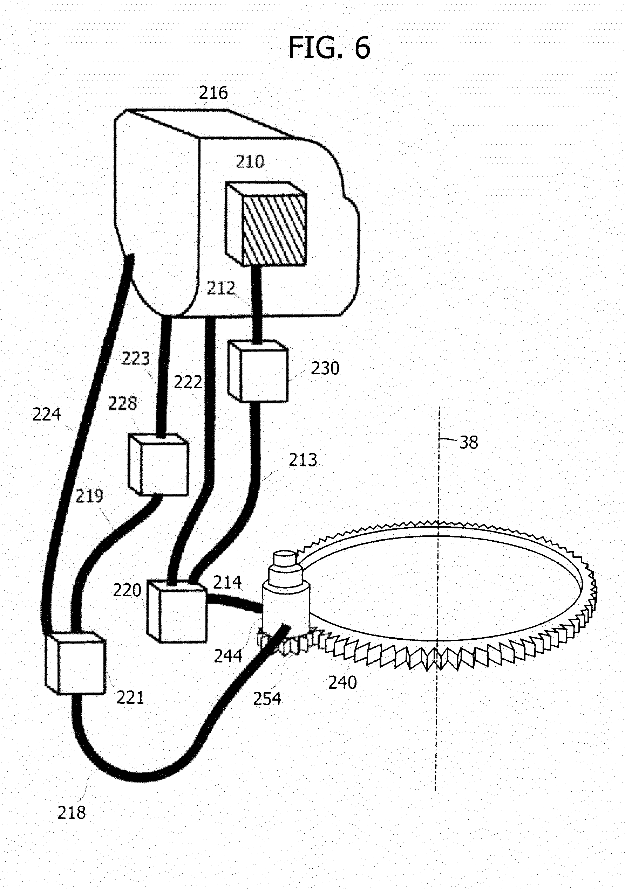

Fig. 6 shows a schematic view of a further exemplary embodiment of a hydraulic yaw drive system. It is based on the embodiment shown in Fig. 4 having two overpressure valves 220, 221. In the exemplary embodiment of Fig. 6, the yaw motor 244 is a hydrostatic motor, and the system is further equipped with two switching valves 228, 230, which can be switched between a fully open and a closed status. One switching valve is positioned upstream of the overpressure valve 220, and the other switching valve 228 is located between overpressure valve 221 and the tank 216. The switching valves are indirectly used as fixation elements to hinder the nacelle from moving about the yaw axis 38. When both switching valves are closed, the hydraulic fluid enclosed in the lines 213, 214, 218, 219 and in the yaw motor 244 can not flow in either direction, as the switching valves block the flow. Hence, the nacelle is hindered from turning about its yaw axis 38, because the closed switching valves do not allow a flow of hydraulic fluid through the yaw motor 244, which means that the hydrostatic motor can not turn, and consequently the nacelle can not turn about the yaw axis 38. Accordingly, the system of Fig. 6 acts as a kind of fixation brake for the nacelle.

The above-described systems and methods facilitate yaw drive systems with reduced cost and size, which can replace or being used instead of conventional yaw drive systems with considerably larger size. Further, some embodiments of yaw drive systems described herein may support or replace conventional brake systems, such as disc brakes.

Exemplary embodiments of systems and methods for a yaw drive system for a wind turbine are described above in detail. The systems and methods are not limited to the specific embodiments described herein, but rather, components of the systems and/or steps of the methods may be utilized independently and separately from other components and/or steps described herein. Further, the exemplary embodiment can be implemented and utilized in connection with many other rotor blade applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A yaw drive system for a wind energy system, comprising:
   a) at least one hydraulic yaw motor for adjusting the yaw angle of a nacelle of a wind energy system;
   b) at least one hydraulic pump adapted for providing a pressurized hydraulic fluid;
   c) a hydraulic line system, including at least one line connecting the at least one hydraulic pump and the at least one hydraulic yaw motor; and,
   d) at least one overpressure valve;
      wherein the at least one overpressure valve is connected to at least one flow path of the hydraulic fluid between the at least one hydraulic pump and the at least one hydraulic motor.
2. The system of clause 1, wherein the at least one overpressure valve is adapted to open if a pressure in the at least one flow path between the at least one pump and the at least one hydraulic motor exceeds a predefined value.
3. The system of any preceding clause, wherein the at least one overpressure valve is adapted to open if a torque exerted on the at least one hydraulic motor by the wind via a rotor and a nacelle of the wind turbine exceeds a predefined limit.
4. The system according to any preceding clause, wherein the at least one overpressure valve is configured such that, in case that a yaw torque exerted on the nacelle by the wind exceeds a predefined threshold, the at least one overpressure valve opens and the nacelle may turn as a reaction to the torque exerted by the wind.
5. The yaw drive system according to any preceding clause, further comprising:
   a) at least one hydraulic tank connected via at least one second line to the at least one hydraulic pump; and,
   b) at least one third line, connecting the at least one hydraulic yaw motor and the at least one hydraulic tank.
6. The system of any preceding clause, wherein the predefined value is from 50 bar to 500 bar.
7. The system of any preceding clause, wherein the at least one hydraulic pump is one of a hydrodynamic pump and a hydrostatic pump.
8. The system of any preceding clause, wherein the at least one hydraulic motor is one of a hydrodynamic motor and a hydrostatic motor.
9. The system of any preceding clause, wherein the at least one hydraulic pump is one of a gearpump, a radial piston pump and an axial piston pump.
10. The system of any preceding clause, wherein the at least one motor is one of a vane motor, an axial plunger motor and a radial piston motor.
11. The system of any preceding clause, wherein the tank is pressurized with a pressure from 2 bar to 30 bar.
12. The system of any preceding clause, wherein the tank is under atmospheric pressure.
13. A wind energy system, comprising:
   a) a tower; and,
   b) a nacelle; and,
   c) a rotor; and,
   d) a yaw drive system, including:
      i) at least one hydraulic yaw motor for adjusting the yaw angle of a nacelle of the wind energy system;
      ii) at least one hydraulic pump adapted for providing a pressurized hydraulic fluid;
      iii) a hydraulic line system, including at least one line connecting the at least one hydraulic pump and the at least one hydraulic yaw motor; and,
      iv) at least one overpressure valve;
   wherein the at least one overpressure valve is connected to at least one flow path of the hydraulic fluid between the at least one hydraulic pump and the at least one hydraulic motor.
14. A method of changing a yaw angle of a wind turbine nacelle, comprising:
   a) providing a yaw drive system, including:
      i) at least one hydraulic yaw motor for adjusting the yaw angle of a nacelle of a wind energy system;
      ii) at least one hydraulic pump adapted for providing a pressurized hydraulic fluid;
      iii) a hydraulic line system, including at least one line connecting the at least one hydraulic pump and the at least one hydraulic yaw motor; and,
      iv) at least one overpressure valve;
         wherein the at least one overpressure valve is connected to the at least one flow path of the hydraulic fluid between the at least one hydraulic pump and the at least one hydraulic motor; and,
   b) actuating the at least one hydraulic yaw motor in order to change the yaw angle of the nacelle.
15. The method of any preceding clause, further comprising:
   - opening the at least one overpressure valve when the pressure in the at least one flow path between the at least one hydraulic pump and the at least one hydraulic motor exceeds a predefined value.
16. The method of any preceding clause, further comprising:
   - closing the at least one overpressure valve when the pressure in the at least one flow path has fallen below a predefined value.
17. The method of any preceding clause, further comprising:
   - continuing to change the yaw angle of the nacelle by actuating the hydraulic motor.
18. The method of any preceding clause, further comprising:
   - closing at least one switching valve located in a flow path between at least one hydraulic tank and at least one hydraulic motor.
19. The method of any preceding clause, further comprising:
   - closing at least one switching valve located in a first hydraulic line connected to the at least one hydraulic motor and closing at least one switching valve located in a second hydraulic line connected to the at least one hydraulic motor.
20. The method of any preceding clause, wherein at least one first overpressure valve is located in a flow path between the first switching valve and the at least one hydraulic motor, and at least one second overpressure valve is located in a flow path between the second switching valve and the at least one hydraulic motor.

## Claims

1. A yaw drive system for a wind energy system, comprising:
a hydraulic yaw motor (244) for adjusting the yaw angle of a nacelle of a wind energy system;
a hydraulic pump (210) adapted for providing a pressurized hydraulic fluid;
a hydraulic line system (212), including a first line connecting the hydraulic pump and the hydraulic yaw motor; and
an overpressure valve (220);
wherein the overpressure valve (220) is connected to a flow path of the hydraulic fluid between the hydraulic pump and the hydraulic motor.

2. The system of claim 1, wherein the overpressure valve (220) is adapted to open if the pressure in the flow path between the hydraulic pump and the hydraulic motor exceeds a predefined value.

3. The yaw drive system according to claim 1 or claim 2, further comprising:
a hydraulic tank (216) connected via a second line to the hydraulic pump (210); and
a third line, connecting the hydraulic yaw motor (244) and the hydraulic tank.

4. The system of any preceding claim, wherein the predefined value is from 50 bar to 500 bar.

5. The system of any preceding claim, wherein the hydraulic pump (210) is a hydrodynamic pump or a hydrostatic pump, and wherein the hydraulic motor is a hydrodynamic motor or a hydrostatic motor.

6. The system of any preceding claim, wherein the at least one pump (210) is a gearpump, a radial piston pump or an axial piston pump, and wherein the at least one motor is a vane motor, an axial plunger motor or a radial piston motor.

7. The system of any preceding claim, wherein the tank (216) is pressurized with a pressure from atmospheric pressure to 30 bar.

8. A wind turbine (10), comprising a system according to any preceding claim.

9. A method of changing a yaw angle of a wind turbine nacelle (16), comprising:
a) providing a yaw drive system, including:
a hydraulic yaw motor (244) for adjusting the yaw angle of a nacelle of a wind energy system;
a hydraulic pump (210) adapted for providing a pressurized hydraulic fluid;
a hydraulic line system (212), including a line connecting the hydraulic pump and the hydraulic yaw motor; and
an overpressure valve (220);
wherein the overpressure valve is (220) connected to a flow path of the hydraulic fluid between the hydraulic pump and the hydraulic motor; and
b) actuating the hydraulic yaw motor (244) in order to change the yaw angle of the nacelle (16).

10. The method of claim 9, further comprising:
c) opening the at least one overpressure valve (220) when the pressure in a flow path between the at least one hydraulic pump (210) and at least one hydraulic motor (244) exceeds a predefined value; and
d) closing a switching valve located in a flow path between the hydraulic tank (216) and the hydraulic motor (244).
